# EUROPEAN PATENT APPLICATION

(11) **EP 2 077 379 A2**
(43) Date of publication of application: **08.07.2009**
(21) Application number: 08252896.9
(22) Date of filing: 29.08.2008
(51) Int. Cl.: F02C 7/268

(54) **High voltage start of an engine from a low voltage battery**

(30) Priority: 26.12.2007 US 964129
(71) Applicant: Pratt & Whitney Canada Corp., Longueuil, QC J4G 1A1 (CA); Hamilton Sundstrand Corporation, Windsor Locks, CT 06096-1010 (US)
(72) Inventor: Rozman, Gregory I., Rockford, IL 61114 (US); Dooley, Kevin A., Mississauga Ontario L5C 2R6 (CA); Yee, Tony, Brossard Quebec J4Y 3A6 (CA)
(74) Representative: Leckey, David Herbert

(57) **Abstract**

Method and system are disclosed for starting a high voltage engine (112) using a starter permanent magnet motor (100). The starter motor (100) is powered using a DC power source (114), e.g. a battery, remote from the starter motor (100). A bidirectional DC-to-DC converter (116) local to the DC power source (114) is used to produce a variable high voltage variable frequency power for driving the starter motor (100), and is remotely controlled to produce a controlled output current level. During generate mode the DC-DC converter (116) may be used to charge the battery (114).

## Description

### TECHNICAL FIELD

The invention relates generally to a starter / generator system and method, and in particular to high voltage gas turbine engine start using low voltage battery.

### BACKGROUND OF THE ART

The so-called "more electric" gas turbine engine is proposed as a way to improve the performance and weight of gas turbine propulsion engines. A traditional gas turbine engine produces thrust and pneumatic, hydraulic and electric power. The "more electric" gas turbine engine is optimized to produce thrust and electric power, smaller electric machines generating the power needed for the pneumatic and hydraulic systems. The electrical system of a large size gas turbine engine reaches a high voltage of up to 270 VDC. Such high voltages raise challenges in the engine start technology for example.
One example of a starter/generator system operable in both starting and generating modes is described in U.S. Patent No.5,581,168. In this patent, a starter/generator system is powered by a battery during start mode. The battery voltage is boosted by a dc-dc converter to a higher variable voltage output.

### SUMMARY

In an aspect, the present description provides a system for producing variable high voltage variable frequency AC power to be used by a starter motor for starting an engine, the system comprising: a DC power source for producing low voltage high current DC power, the DC power source being located remotely from the starter motor; a DC-to-DC converter connected to the DC power source and located in an immediate vicinity of the DC power source, the DC-to-DC converter for converting the low voltage high current power to a variable high voltage low current DC power; and a power converter (commutation circuit) for converting the variable high voltage low current DC power into the variable high voltage variable frequency AC power.

In an aspect, the present description provides a system for producing variable high voltage variable frequency AC power to be used by a starter motor for starting an engine, the system comprising: DC power means for producing low voltage high current DC power, the DC power means being located remotely from the starter motor; DC-to-DC converter means connected to the DC power means and located in an immediate vicinity of the DC power means, the DC-to-DC converter means for converting the low voltage high current power to a variable high voltage low current DC power; a power conversion means for converting the variable high voltage low current DC power into the variable high voltage variable frequency AC power.

In an aspect, the present description provides a method for starting a high voltage engine. The method comprises: providing a low voltage DC power source remotely from the engine, the low voltage DC power producing a low voltage high current DC power; converting the low voltage high current DC power to a variable high voltage low current DC power, in an immediate area of the DC power source; converting the variable high voltage low current DC power into a variable high voltage variable frequency AC power, and starting the engine using the variable high voltage variable frequency AC power.

Further details of these and other aspects will be apparent from the detailed description and figures included below.

### DESCRIPTION OF THE DRAWINGS

Reference is now made to the accompanying figures, in which:
Figure 1 is a block diagram showing an example system for starting a high voltage engine, according to an embodiment described herein; and
Figure 2 is a schematic of an embodiment of the system of Figure 1;
Figure 3 is an algorithm describing the method of this invention.

### DETAILED DESCRIPTION

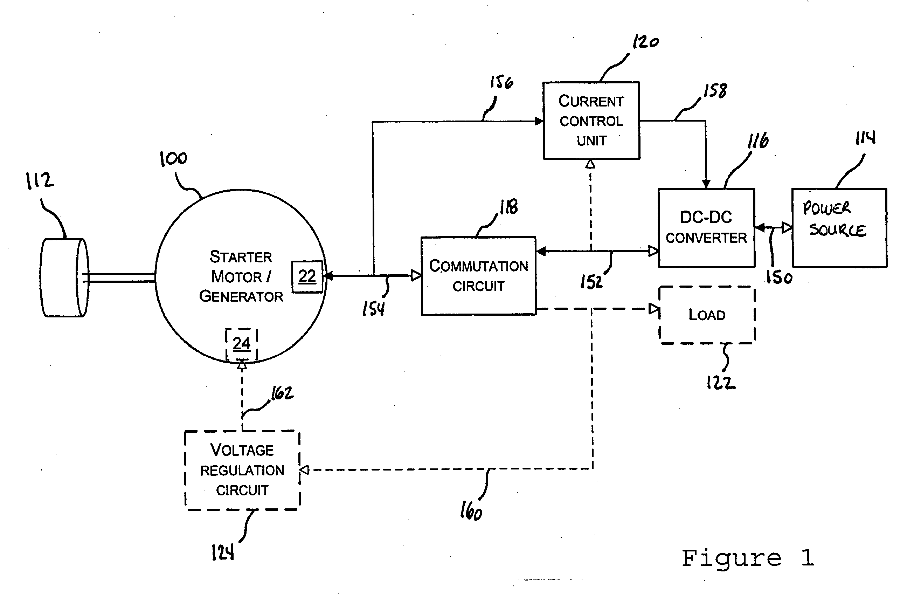

Referring to Figure 1, there is shown an example system for starting a high voltage engine 112. A high voltage starter electrical motor 100 is drivingly connected to an engine 112, such as a gas turbine engine, a windmill or a water turbine, to be started. As will be described further below, in one embodiment, the starter motor 100 is an integrated starter generator and is also used as a generator after the engine 112 is started and, in turn, drivingly actuates the starter motor/generator 100, or integrated starter generator. As such, the starter motor 100 can be used in a start mode or in a generator mode, which are typically selected using an electrical switch. In another embodiment (solid lines and arrows only on Figure 1), the starter motor 100 is inactive or disconnected from the engine 112 after the engine 112 is started and runs on its own.

The starter motor 100 may be a permanent magnet electric machine of the design of machine illustrated in the above Patent Publication, including power windings 22 and control windings 24, but may also be of any other design of an electric machine including other designs of a permanent magnet electric machine, single-phase or multi-phase AC motors, not having any control winding feature nor any saturable portion.

The system of Figure 1 is used to start the engine 112 using a high voltage electric starter motor 100 powered by a low voltage DC power source 114, typically onboard low-voltage batteries. In an embodiment, the DC power source 114 is located remotely from the starter motor 100. Typically, the distance between the DC power source 114 and the starter motor 100 is more than two (2) meters. In the case of aircraft applications, the power source 114 may alternatively consist of an auxiliary power unit or a low-voltage ground power source for example.

A high frequency DC-to-DC converter 116, such as an electronic switch mode converter, having a controlled current high voltage output 152, is used to convert low voltage and high current DC power 150 (28 VDC / 1000 - 1400 amps for example) into a high voltage/low current DC power 152 (270 VDC / 100 - 140 amps for example) for driving the high voltage starter motor 100. The DC-to-DC converter 116 is located very close to the power source 114 thereby using very short lengths of high current cables or wires. The current level required for driving the starter motor 100 being typically higher than 1000 amps and typically between 1000 and 1400 amps, the low voltage cables or wires needed to carry such low voltage DC power typically weigh 3 Ibs per foot (4.47 kg/m). This is therefore a weight issue for the cable or wire running between the DC-to-DC converter 116 and the power source 114. Positioning the DC-to-DC converter 116 in the immediate area of the power source 114 limits the length of low voltage cables or wires required, replacing it by high voltage, lighter cables or wires. Typically, the distance between DC-to-DC converter 116 and power source 114 is less than one (1) metre, but can be as short as a few centimetres. In an embodiment, the power source 114 is a battery. The DC-to-DC converter may be mounted directly on the battery or may be part of the battery assembly for example.

The high voltage/low current DC power 152 is carried on high voltage cables or wires to the area where the starter generator 100 is installed. A commutation circuit 118, or bi-directional ac/dc converter, constructed as those known in the art, such as a MOSFET-based inverter for example, is used to produce the AC drive current 154 for driving the starter motor 100 by powering the power windings 22. Commutation is controlled based on the rotor position or using any other sensorless technique such as, for example, the position sensing circuit described in applicant's co-pending US application serial no. 10/724,148 entitled "Sensorless Control in a Permanent Magnet Machine", filed June 2, 2005 and incorporated herein by reference, wherein electricity induced from a winding set is used to determine the rotor position.

As mentioned herein above, the high voltage output 152 of the DC-to-DC converter has a controlled output current. Current control is used to improve efficiency of the starting system. The current control is performed remotely by a current control unit 120 typically located in the area of the starter motor 100 and using a feedback 156 from the current level in the power windings 22. The current control unit 120 typically produces a current control signal 158 to the DC-to-DC converter 116 such that the DC-to-DC converter 116 maintains the drive current level to a reference value level.

If the system of Figure 1 is configured so that the starter motor 100 may also be used in a generator mode, the generated power may be used to power up auxiliary units though a power distribution system, herein illustrated as the load 122, or to charge a low voltage battery connected as a power source 114. In this case, the DC-to-DC converter is a bidirectional converter allowing conversion from a low voltage power 150 to a high voltage power 152, in engine start mode, or from a high voltage power 152 to a low voltage power 150, in the battery charge mode. In the battery charge mode, the output of the DC-to-DC converter is the low voltage power 150 and the DC-to-DC converter is used to control the current level of the low voltage power 150 for proper charge of the battery. In this case, the current control unit 120 instead uses a feedback from the current level on the high voltage power 152 for current control of the low voltage power 150. It is also noted that the commutation circuit 118 is also bidirectional, working either as an inverter for driving the starter motor 100 in the start engine mode, or as a rectifier in the generator mode. Operation switches may be used to switch between the engine start mode and the generator mode.

The starter motor / generator 100 may advantageously use the motor design described in US Patent Nos. US 7,262,539 and 5,581,168 when in the generator mode for regulating the output voltage of the generator 100 by adjusting the current in the control windings 24. In the generator mode, a voltage regulation circuit 124 controls the current level in the control windings 24 as a function of the voltage level of the high voltage 152 at the output of the rectifier 118. The rectifier 118, here used to convert the high voltage AC output power of the generator 100 into a high voltage DC power, but further filtering is normally required. The voltage regulation circuit 124 further regulates the high voltage DC power and reduce remaining ripples, thereby relaxing the filtering requirements of the commutation circuit 118.

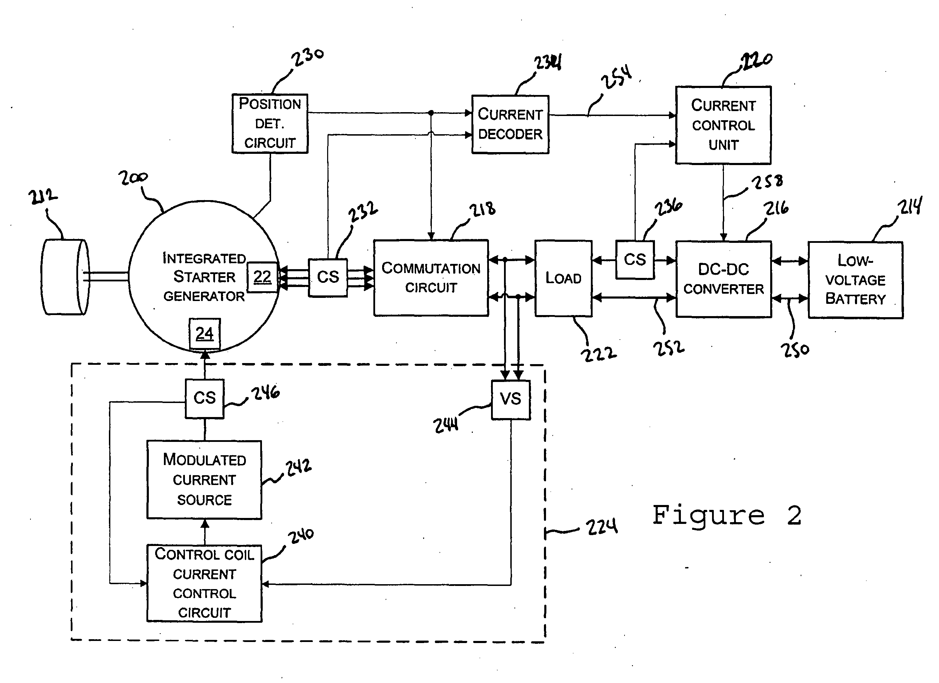

Figure 2 shows one specific example embodiment of the system of Figure 1. A high voltage integrated starter generator 200 is used to start an engine 212. The integrated starter generator 200 uses the motor design disclosed in US Patent Nos. US 7,262,539 and 5,581,168 and may be operated in a starter mode to start the engine 212 or in a generator mode for powering up a load 222 and/or charging the low-voltage battery 214. The operation mode is selected through the use of electrical switches. In this embodiment, the integrated starter generator 200 is driven in a six-step constant-current drive scheme which allows the use of a very simple control circuits.

A low-voltage battery 214 is used to produce the required power to start the engine 212. A bidirectional high frequency DC-to-DC converter 216 having a current controlled low current output 250 in the generator mode and a current controlled high voltage output 252 in the starter mode, is used to convert low voltage DC power into high voltage DC power and vice versa. A current control signal 258 controlling the current level at the output of the DC-to-DC converter 216 is generated by a current control unit 220. In starter mode, the current control unit 220 uses a feedback on the phase current level of the integrated starter generator 200 in order to generate the current control signal 258. The phase current level is first read using a current sensor 232 and is converted into a current level signal 254 by a current decoder 234 through the use of the position of the integrated starter generator 200 as read by a position detection circuit 230. Current sensor 236 also reads the current level from load 222 or DC-to-DC converter 216 (depending on the mode of operation: starter or generator) and feeds its reading as a current level signal to current control unit 220. The current control unit 220 is typically a proportional / integral control loop. In generator mode, the current control unit 220 rather uses a feedback on the current level of the high voltage DC power, in a proportional / integral control loop to produce the current control signal 258.

In starter mode, gating of the commutation circuit 218 is here controlled using the position of the integrated starter generator 200 as provided by the position determining circuit 230 and a commutation table lookup. In generator mode, gating of the commutation circuit 218 is disabled to provide a simple rectifier.

The integrated starter generator 200 preferably uses the design of the machine/motor described in US Pat. No. 7,262,539 for regulating the output voltage of the integrated starter generator 200 in generator mode using a voltage regulation circuit 224. The control windings 24 are powered using a modulated current source 242 of which the current level is controlled by a control coil current control circuit 240. The control coil current control circuit 240 proportional / integral control loop receives a feedback from a voltage sensor 244 reading the output voltage of the integrated starter generator 200. When in starter mode, the control current in the control windings 24 is simply maintained to a fixed level though a feedback from a current sensor 246 reading the effective control current in the control windings 24.

Furthermore, in the embodiment of Figure 2, the low-voltage battery is carried onboard. In the case of an engine 212 breakdown for example, the integrated starter generator 200 may be disconnected or disabled such that the low-voltage battery 214 and the DC-to-DC converter 216 together produce an emergency high voltage source for powering up the high voltage load 222.

A modified buck-boost topology of DC-to-DC converter 216 could also be used along with a high-voltage battery, if available.

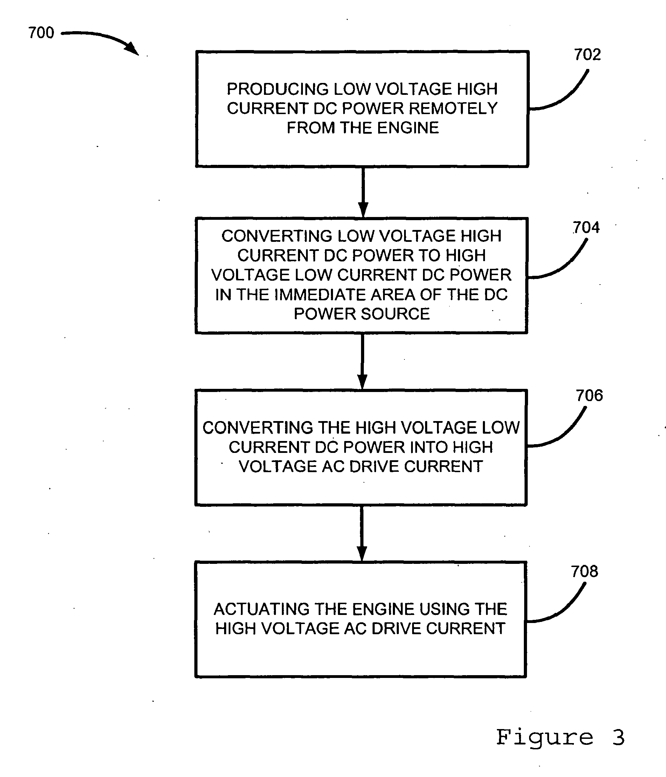

Now turning to Fig. 3, a method for starting a high voltage engine is described. Method 700 comprises: providing a low voltage DC power source remotely from the engine, the low voltage DC power producing a low voltage high current DC power (step 702); converting the low voltage high current DC power to a variable high voltage low current DC power, in an immediate area of the DC power source (step 704); converting the variable high voltage low current DC power into a variable high voltage variable frequency AC power (step 706); and starting the engine using the variable high voltage variable frequency AC power (step 708).

The above description is meant to be exemplary only, and one skilled in the art will recognize that changes may be made to the embodiments described without departing from the invention disclosed. Such modifications are intended to fall within the scope of the appended claims.

## Claims

1. A system for producing variable high voltage variable frequency AC power to be used by a starter motor (100;200) for starting an engine (112;212), the system comprising:
a DC power source (114;214) for producing low voltage high current DC power (150;250), the DC power source being located remotely from the starter motor (100;200);
a DC-to-DC converter (116;216) connected to the DC power source (114;214) and located in an immediate vicinity of the DC power source (114;214), the DC-to-DC converter (116;216) for converting the low voltage high current power (150;250) to a variable high voltage low current DC power (152;252); and
a power converter (118;218) for converting the high voltage low current DC power (152;252) into the variable high voltage variable frequency AC power.

2. The system of claim 1, further comprising a current control unit (120;220) for producing a current control signal (158;258), the producing being performed using a feedback signal indicative of the starter/generator phase currents, and wherein the converting of the low voltage high current power (150;250) to a variable high voltage low current DC power (152;252) is performed as a function of the current control signal (158;258).

3. The system of claim 1 or 2, wherein the DC-to-DC converter (116;216) is mounted directly on the power source (114;214).

4. The system of any preceding claim, further comprising an electrical wire for electrically connecting the DC-to-DC converter (116;216) and the power converter (118;218), the electrical wire of a gauge suitable for carrying high voltage low current DC power (152;252).

5. The system of any preceding claim, wherein the starter motor (100;200) comprises an integrated starter generator (ISG) drivingly connected to the engine (112;212), the ISG for generating a high voltage AC power in a generator mode, the power converter (118;218) being bidirectional and having a rectifying mode for rectifying the generated high voltage AC power to produce a high voltage low current DC power.

6. The system of claim 5, wherein the power source (114;214) comprises a battery and wherein the DC-to-DC converter (116;216) is bidirectional and, in the generator mode, is for using the generated high voltage low current DC power to produce low voltage variable DC current for charging the battery (112;214).

7. The system of claim 5 or 6, wherein the ISG comprises control windings (24), and the system further comprises a voltage regulation circuit (124;224) for regulating the generated high voltage low current DC power (152;252), the voltage regulation circuit for producing a saturating control current for use by the control windings (24), the voltage regulation circuit (224) being further for receiving a second feedback signal indicative of the DC high voltage and for varying the saturating control current in order to adjust the generated DC high voltage to a specified level.

8. The system of claim 5, 6 or 7, wherein the high voltage AC drive current comprises a six-step constant-level drive current.

9. A system for producing variable high voltage variable frequency AC power to be used by a starter motor (100;200) for starting an engine (112;212), the system comprising:
DC power means (114;214) for producing low voltage high current DC power (150;250), the DC power means (114;214) being located remotely from the starter motor (100;200);
DC-to-DC converter means (116;216) connected to the DC power means (114;214) and located in an immediate vicinity of the DC power means (114;214), the DC-to-DC converter means (116;216) for converting the low voltage high current power (150;250) to a variable high voltage low current DC power (152;252);
a power converter (118;218) for converting the variable high voltage low current DC power (152;252) into the variable high voltage variable frequency AC power.

10. A method for starting a high voltage engine (112;212), the method comprising:
providing a low voltage DC power source (114;214) remote from the engine (112;212), the low voltage DC power (114;214) producing a low voltage high current DC power (150;250);
converting the low voltage high current DC power (150;250) to a variable high voltage low current DC power (152;252), in an area proximate the DC power source (114;214);
converting the variable high voltage low current DC power (152;252) into a variable high voltage variable frequency AC drive power; and
starting the engine (112;212) using the variable high voltage variable frequency AC power.

11. The method of claim 10, further comprising controlling a current level of the high voltage low current DC power (152;252) as a function of a control current signal (158;258).

12. The method of claim 11 further comprising generating the current control signal (258) using a first feedback signal (254) indicative of the starter / generator phase currents.

13. The method of claim 10, 11 or 12, further comprising, in a generator mode, generating a high AC voltage power supplied by the engine motive power and rectifying the AC voltage to produce a generated DC high voltage.

14. The method of any of claims 10 to 13, wherein the providing comprises providing a battery (114;214) and further comprising, in the generator mode, charging the battery (114;214) using the generated DC voltage conditioned by the DC-DC converter.
